# EUROPEAN PATENT APPLICATION

(11) **EP 4 764 832 A1**
(43) Date of publication of application: **24.06.2026**
(21) Application number: 25207544.5
(22) Date of filing: 08.10.2025
(51) Int. Cl.: G06F 8/60, G06F 8/71, G06F 9/445, G06F 9/455

(54) **UTILIZING VIRTUALIZATION TO ISOLATE APPLICATIONS WHILE PROVIDING API ACCESS**

(30) Priority: 19.12.2024 US 202418988659
(71) Applicant: TOYOTA JIDOSHA KABUSHIKI KAISHA, Toyota-shi, Aichi-ken 471-8571 (JP)
(72) Inventor: ZAGAR, Aleksander, Chuo-Ku, 103-0022 (JP)
(74) Representative: D Young & Co LLP

(57) **Abstract**

Utilizing virtualization to isolate applications (212) while providing API access is implemented by validating an application package (218, 318) for execution of an application (212) in a vehicle computing environment (100), creating a virtualized environment (106A, 106B, 206, 306) in the vehicle computing environment (100), the virtualized environment (106A, 106B, 206, 306) dedicated to execution of the application (212), connecting, to a private virtual network (114A, 114B, 214, 314A, 314B, 314C) unique to the application (212), the virtualized environment (106A, 106B, 206, 306) and at least one vehicle service API (216A, 216B, 316A, 316B, 316C) executed in a native environment (204) of the vehicle computing environment (100), and deploying the application package (218, 318) into the virtualized environment (106A, 106B, 206, 306).

## Description

### FIELD

The present disclosure relates to utilizing virtualization to isolate applications while providing API access.

### BACKGROUND

Automobile computing environments have evolved significantly from simple onboard diagnostics to complex systems that manage driving, safety, entertainment, and communication. Initially, these systems were isolated and limited in functionality, but advancements in technology have integrated them into a unified computing environment. This integration has enabled more sophisticated features and the inclusion of third-party applications to support a wide range of services. As a result, third-party applications often interact with native APIs to access various vehicle functions.

### SUMMARY

Utilizing virtualization to isolate applications while providing API access is implemented by validating an application package for execution of an application in a vehicle computing environment, creating a virtualized environment in the vehicle computing environment, the virtualized environment dedicated to execution of the application, connecting, to a private virtual network unique to the application, the virtualized environment and at least one vehicle service API executed in a native environment of the vehicle computing environment, and deploying the application package into the virtualized environment.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a schematic diagram of a vehicle computing environment, according to at least some embodiments of the subject disclosure.
FIG. 2 is a schematic diagram of a private virtual network in a native environment and interacting with a virtualized environment, according to at least some embodiments of the subject disclosure.
FIG. 3 is a schematic diagram of an orchestrator in a native environment and interacting with a virtualized environment, according to at least some embodiments of the subject disclosure.
FIG. 4 is an operational flow for utilizing virtualization to isolate applications while providing API access, according to at least some embodiments of the subject disclosure.
FIG. 5 is an operational flow for connecting a private virtual network, according to at least some embodiments of the subject disclosure.
FIG. 6 is a block diagram of a hardware configuration for utilizing virtualization to isolate applications while providing API access, according to at least some embodiments of the subject disclosure.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. In addition, the present disclosure may repeat reference numerals and/or letters in the various examples. This repetition is for the purpose of simplicity and clarity and does not in itself dictate a relationship between the various embodiments and/or configurations discussed.

Providing an execution environment for third-party applications in the vehicle domain presents challenges. One technique known to the inventors is to isolate these applications to minimize attack surface. Isolation helps prevent issues that could affect other systems if a third-party application malfunctions. The challenge considered by the inventors is in maintaining isolation while also providing fine-grained access to the vehicle's APIs, including necessary authentication and authorization.

In at least some embodiments of the subject disclosure, virtualization and network partitioning are utilized to manage API access to third party applications that are otherwise isolated from the rest of the computing environment. In at least some embodiments, third party packages are digitally signed images to be deployed in the virtualized environment that are validated and managed via an orchestrator service running natively in the computing environment. In at least some embodiments, vehicle services are run natively and provide APIs via a networking middleware solution for distributed environments. In at least some embodiments, the orchestrator service is configured to validate third party application packages, create virtual environments, and deploy application packages into the virtual environment. In at least some embodiments, the orchestrator service creates a private virtual network dedicated to a certain virtual environment or container. In at least some embodiments, the orchestrator service configures, based on the package metadata, vehicle services to advertise, on that private virtual network, any vehicle service APIs to which the third party application has access. In at least some embodiments, third party applications are isolated from other vehicle service APIs and other applications.

In at least some embodiments, utilizing virtualization to isolate third party applications while providing API access is more secure than executing third party applications in the native environment. In at least some embodiments, there is no potential for a third party application to gain root access. In at least some embodiments, once the orchestrator initially verifies the third party application, then no further verification is necessary while the third party application remains deployed. In at least some embodiments, communication with the vehicle service API does not require encryption or rights management. In at least some embodiments, the absence of vehicle service API encryption and rights management outweighs the performance impact of virtualization and reduces burden on third party application developers. In at least some embodiments, updates to the native environment do not affect the third party applications as long as the vehicle service APIs and virtual environment I/O are the same. In at least some embodiments, virtualization is implemented using technology stacks known to the inventors.

In at least some embodiments, a binary package contains a target virtualized environment image that includes the actual application developed by a third-party developer and encrypted metadata about the application package. In at least some embodiments, this metadata includes information about which vehicle services the application can access and which API versions are compatible. In at least some embodiments, such applications are developed by third-party developers and are executed in the virtualized environment managed by an orchestrator service native to the vehicle computing environment. In at least some embodiments, third-party developers provide the application for certification to the vehicle manufacturer, who checks and digitally signs the package if the application is approved. In at least some embodiments, every virtualized environment in which an application is executed will have a dedicated private virtual network managed by the orchestrator service. In at least some embodiments, each application then uses this dedicated private virtual network to access, via a networking middleware solution, such as DATA DISTRIBUTION SERVICE (RTM), APIs provided by vehicle services running natively. In at least some embodiments, vehicle services are general services developed by the vehicle manufacturer and run natively on the vehicle computing environment. In at least some embodiments, vehicle services will advertise and provide APIs only to private virtual networks dedicated to third party applications with authorized access to the vehicle service. In at least some embodiments, the orchestrator service manages to which virtual networks each vehicle service publishes its APIs. In at least some embodiments, virtual networks are completely isolated from each other. In at least some embodiments, the orchestrator is configured for managing virtual networks, and validating, deploying, and assigning networks for third-party application package runtimes. In at least some embodiments, the orchestrator also configures on which network individual vehicle services advertise and expose APIs. In at least some embodiments, upon startup of the vehicle computing environment, the orchestrator service checks and validates all third-party application packages, which could be in any format depending on the available virtualized environment. In at least some embodiments, the orchestrator checks and validates multiple packages upon startup of the vehicle computing environment or individually while the vehicle computing environment is running. In at least some embodiments, if validation is successful, the orchestrator creates a private virtual network dedicated to that third-party application package, and also creates the virtualized environment before or after creating the private virtual network. In at least some embodiments, in the metadata of the third-party application package, the orchestrator determines which services the third party application is authorized to access. In at least some embodiments, accessible services are determined before or after the virtualized environment and the private virtual network are created, depending on implementation parameters. In at least some embodiments, the orchestrator creates the virtualizations (computing environment and private network) before conducting verification of the third party application, and then deploys the third party application in the virtualized environment once verification is complete. In at least some embodiments, the orchestrator then configures the vehicle services used by the third-party application to advertise and provide APIs on the private virtual network dedicated to that third-party application after deployment. In at least some embodiments, vehicle services can be connected or disconnected from the private virtual network while deployed. In at least some embodiments, the orchestrator creates the virtualized environment first, then assigns the private virtual network, and finally deploys the image that includes the third-party application in the virtualized environment. In at least some embodiments, once a private virtual network is created, vehicle services are instructed to announce or advertise their capabilities to the third-party application. In at least some embodiments, the third-party application is already programmed to use the capabilities of the vehicle service, such as calls of the API. In at least some embodiments, all vehicle services are provided through APIs. In at least some embodiments, vehicle services are fine-grained so that access to a particular vehicle service does not result in access to any other vehicle service.

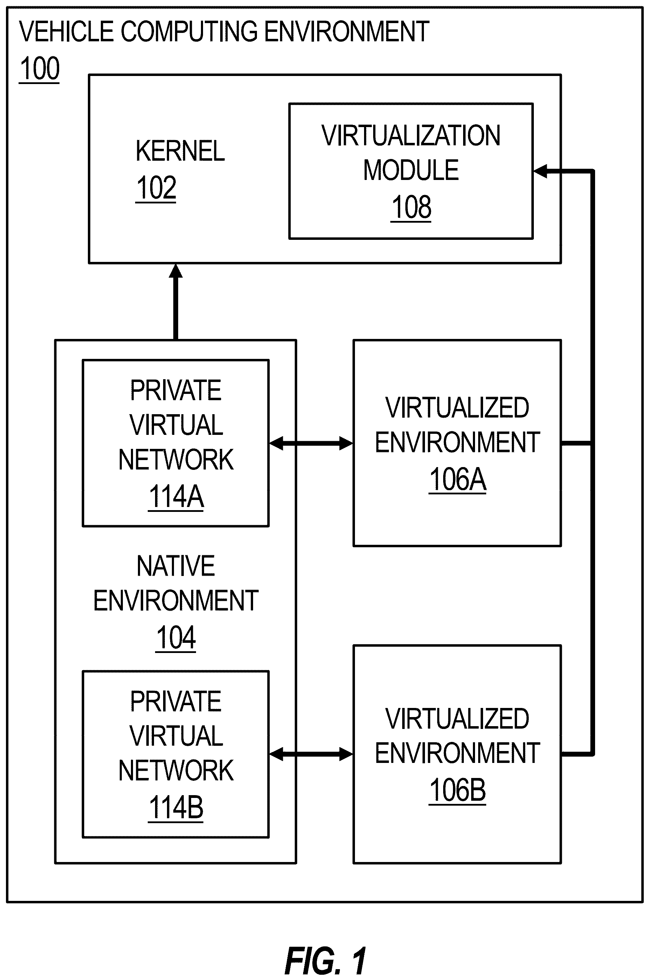

FIG. 1 is a schematic diagram of a vehicle computing environment 100, according to at least some embodiments of the subject disclosure. Vehicle computing environment 100 includes kernel 102, native environment 104, virtualized environments 106A and 106B, private virtual networks 114A and 114B, and virtualization module 108.

In at least some embodiments, vehicle computing environment 100 includes an embedded system, an automotive-grade processor, a real-time operating system (RTOS), a controller area network (CAN), etc. In at least some embodiments, vehicle computing environment 100 is configured to manage overall vehicle operations and integrate various subsystems. In at least some embodiments, vehicle computing environment 100 is configured to interface with various hardware and software components.

Kernel 102 is a component of the vehicle computing environment 100. In at least some embodiments, kernel 102 includes a microkernel, a monolithic kernel, a hybrid kernel, etc. In at least some embodiments, kernel 102 is configured for process management and device control. In at least some embodiments, kernel 102 is configured to interface with hardware and provide basic services to applications. In at least some embodiments, kernel 102 is configured to manage core system operations and resource allocation. In at least some embodiments, kernel 102 is configured to directly interact with native environment 104 and virtualized environments 106A and 106B.

Native environment 104 is a component of the vehicle computing environment 100. In at least some embodiments, native environment 104 is a vehicle operating system. In at least some embodiments, native environment 104 is configured to execute core vehicle functions, provide security and stability, and manage updates and patches. In at least some embodiments, native environment 104 is configured to interact with all vehicle components, interface with external networks, and manage user inputs and outputs. In at least some embodiments, native environment 104 includes native applications, middleware, system libraries, etc. In at least some embodiments, native environment 104 is configured to manage native application execution and native system services.

Virtualized environments 106A and 106B are components of the vehicle computing environment 100. In at least some embodiments, virtualized environments 106A and 106B each include a virtual machine, a container, a hypervisor, etc. In at least some embodiments, virtualized environments 106A and 106B are configured to isolate third-party applications and provide dedicated execution environments. In at least some embodiments, virtualized environments 106A and 106B are managed by an orchestrator service. In at least some embodiments, virtualized environments 106A and 106B are each configured to connect to private virtual networks, such as private virtual networks 114A and 114B. In at least some embodiments, virtualized environments 106A and 106B, along with private virtual networks 114A and 114B, are configured to enable isolation of third-party applications from native applications and each other. In at least some embodiments, the virtualized environments 106A and 106B, combined with private virtual networks 114A and 114B, enable prevention of root access escalation and other potential crises.

Private virtual networks 114A and 114B are components of native environment 104. In at least some embodiments, private virtual networks 114A and 114B each include a virtual LAN (VLAN), software-defined networking (SDN), network virtualization, etc. In at least some embodiments, private virtual networks 114A and 114B are configured to interface with vehicle service APIs and third party applications. In at least some embodiments, private virtual networks 114A and 114B are configured to isolate network traffic and provide secure communication channels. In at least some embodiments, private virtual networks 114A and 114B are configured to respectively connect virtualized environments 106A and 106B with vehicle service APIs. In at least some embodiments, private virtual networks 114A and 114B enable prevention of applications from accessing services without authorization. In at least some embodiments, each virtualized environment, such as virtualized environments 106A and 106B, has its own private virtual network, such as private virtual networks 114A and 114B, which are isolated from each other. In at least some embodiments, each private virtual network isolates the virtualized environment from applications and vehicle service APIs that are not connected to the private virtual network.

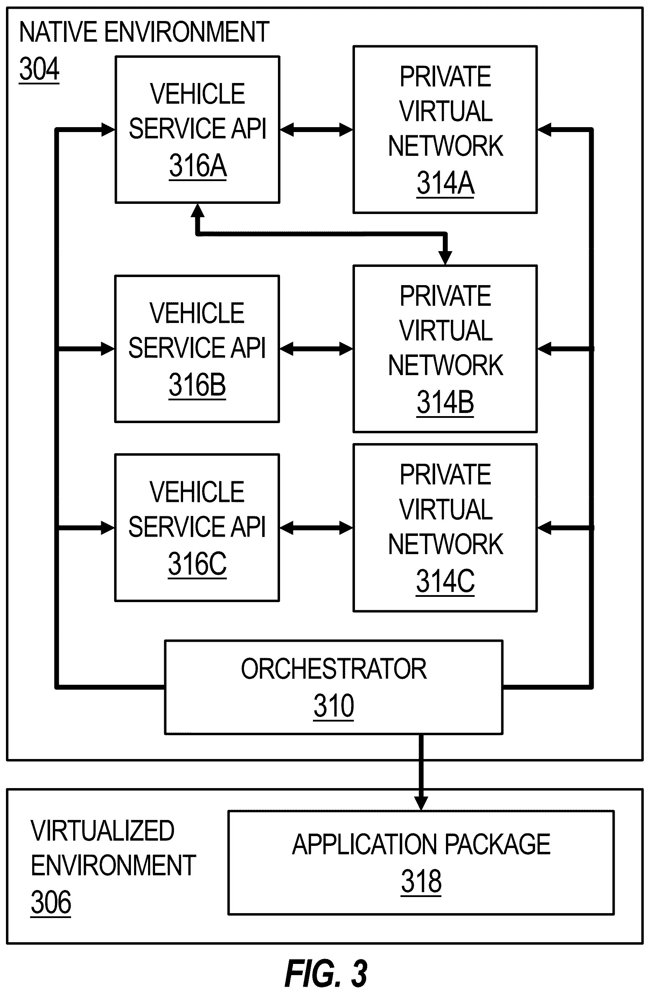

Virtualization module 108 is a component of the vehicle computing environment 100. In at least some embodiments, virtualization module 108 includes a hypervisor, a virtual machine monitor (VMM), virtualization software etc. In at least some embodiments, virtualization module 108 is configured for resource allocation. In at least some embodiments, virtualization module 108 is configured to manage virtualized environments and provide virtualization services. In at least some embodiments, virtualization module 108 is configured to communicate with kernel 102 and an orchestrator service, such as orchestrator 310 of FIG. 3, explained hereinafter. In at least some embodiments, virtualization module 108 is configured to run each third-party application in its own virtualized environment.

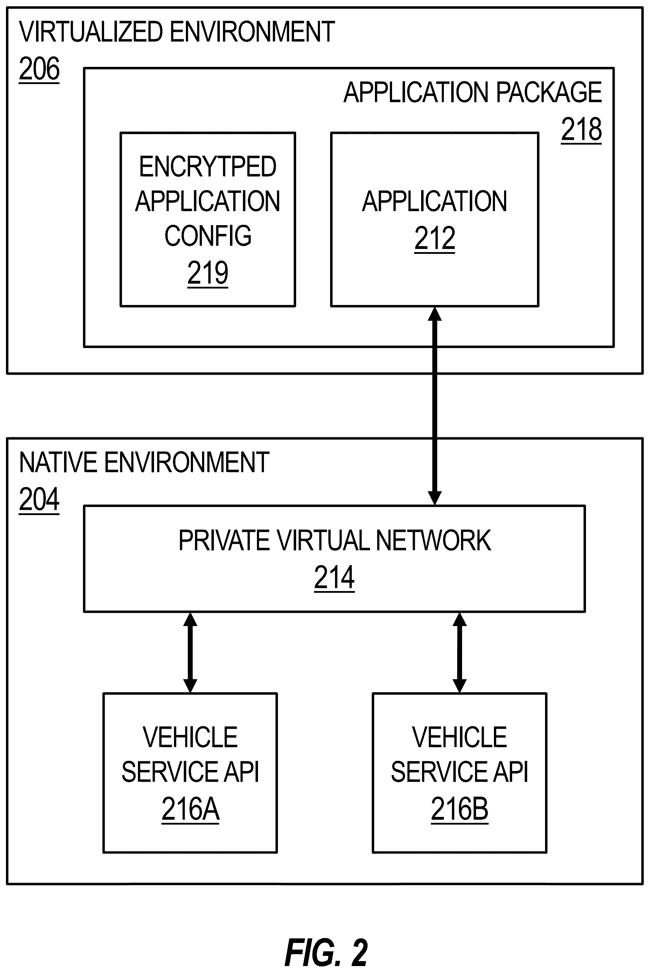

FIG. 2 is a schematic diagram of a private virtual network in a native environment and interacting with a virtualized environment, according to at least some embodiments of the subject disclosure. The schematic diagram includes native environment 204, virtualized environment 206, application 212, private virtual network 214, vehicle service APIs 216A and 216B, application package 218, and encrypted application configuration 219.

The descriptions of native environment 104 with respect to FIG. 1 are generally applicable to native environment 204 unless in conflict with the following. In at least some embodiments, native environment 204 is configured to host vehicle service APIs, such as vehicle service APIs 216A and 216B, and manage native vehicle functions.

The descriptions of virtualized environments 106A and 106B with respect to FIG. 1 are generally applicable to virtualized environment 206 unless in conflict with the following. In at least some embodiments, virtualized environment 206 is configured to host third-party applications, such as application 212. In at least some embodiments, virtualized environment 206 is configured to provide sandboxed execution of application 212.

Application 212 is within virtualized environment 206. In at least some embodiments, application 212 is a third-party application, such as custom vehicle control software. In at least some embodiments, application 212 is configured to deliver user features, process data and commands, and provide feedback and control. In at least some embodiments, application 212 is configured to interact with virtualized environment 206, interface with vehicle service APIs 216A and 216B, and manage user interactions. In at least some embodiments, application 212 is configured to execute specific functions, and provide user services. In at least some embodiments, application 212 is configured to communicate with vehicle sensors and access vehicle data through vehicle service APIs 216A and 216B.

The descriptions of private virtual networks 114A and 114B with respect to FIG. 1 are generally applicable to private virtual network 214 unless in conflict with the following. In at least some embodiments, private virtual network 214 is configured to connect virtualized environment 206, and interface with vehicle service APIs 216A and 216B.

Vehicle service APIs 216A and 216B are components of native environment 204. In at least some embodiments, vehicle service APIs 216A and 216B are RESTful APIs or proprietary vehicle control interfaces. In at least some embodiments, vehicle service APIs 216A and 216B are configured to offer standardized access to vehicle functions, and manage data and control requests. In at least some embodiments, vehicle service APIs 216A and 216B are configured to interact with applications 212, and interface with native environment 204. In at least some embodiments, all interactions between the native system and third-party applications occur through vehicle service APIs, such as vehicle service APIs 216A and 216B. In at least some embodiments, at least one vehicle service API, such as vehicle service APIs 216A and 216B, is configured to provide, upon request by application 212, information about at least one of vehicle speed, vehicle location, transmission state, and engine temperature. In at least some embodiments, at least one vehicle service API, such as vehicle service APIs 216A and 216B, is configured to perform, upon request by application 212, actions for at least one of music navigation, climate control, and media playback. In at least some embodiments, vehicle service APIs 216A and 216B advertise only to specific private virtual networks.

Application package 218 includes application 212 and encrypted application configuration 219. In at least some embodiments, application package 218 is a container image, an application binary, an application bundle, etc. In at least some embodiments, application package 218 is configured to encapsulate the application for deployment, provide necessary resources, and enable secure execution. In at least some embodiments, application package 218 is configured to interact with the orchestrator service, interface with virtualized environment 206, and manage the application lifecycle. In at least some embodiments, application package 218 is configured to contain application code, include metadata for validation, and provide deployment instructions. In at least some embodiments, application package 218 is configured to be validated by the orchestrator service, deployed in virtualized environment 206, and access vehicle service APIs 216A and 216B.

Encrypted application configuration 219 is a component of application package 218. In at least some embodiments, encrypted application configuration 219 includes one or more encrypted configuration files, metadata files, etc. In at least some embodiments, encrypted application configuration 219 is configured to store configuration data securely and provide encrypted sensitive information. In at least some embodiments, encrypted application configuration 219 is accessible by the orchestrator service. In at least some embodiments, encrypted application configuration 219 includes a digital signature for verification of application 212. In at least some embodiments, encrypted application configuration 219 identifies any middleware and libraries utilized by application 212.

FIG. 3 is a schematic diagram of an orchestrator in a native environment and interacting with a virtualized environment, according to at least some embodiments of the subject disclosure. The schematic diagram includes native environment 304, virtualized environment 306, orchestrator 310, private virtual networks 314A, 314B, and 314C, vehicle service APIs 316A, 316B, and 316C, and application package 318.

The descriptions of native environment 104 with respect to FIG. 1 and native environment 204 with respect to FIG. 2 are generally applicable to native environment 304 unless in conflict with the following. In at least some embodiments, native environment 304 is configured to host orchestrator 310 and vehicle service APIs 316A, 316B, and 316C.

The descriptions of virtualized environments 106A and 106B with respect to FIG. 1 and virtualized environment 206 with respect to FIG. 2 are generally applicable to virtualized environments 306 unless in conflict with the following. In at least some embodiments, virtualized environment 306 is configured to run third-party applications. In at least some embodiments, virtualized environment 306 is configured to interface with orchestrator 310 for deployment and management. In at least some embodiments, virtualized environment 306 is configured to receive application packages from orchestrator 310.

Orchestrator 310 is within native environment 304. In at least some embodiments, orchestrator 310 is an orchestration platform, such as KUBERNETES or other management software. In at least some embodiments, orchestrator 310 is configured to oversee application lifecycle management. In at least some embodiments, the orchestrator 310 decodes and verifies an application package using a public key. In at least some embodiments, orchestrator 310 is configured to validate and deploy application packages. In at least some embodiments, orchestrator 310 verifies digital signatures to validate application packages, and deploys application packages upon confirmation of verification. In at least some embodiments, orchestrator 310 validates third-party application packages, creates virtualizations, and deploys third-party application packages. In at least some embodiments, orchestrator 310 sets up private virtual networks, connects virtualized environments, and instructs vehicle service APIs to advertise through the correct private virtual network(s).

The descriptions of private virtual networks 114A and 114B with respect to FIG. 1 and private virtual networks 214 with respect to FIG. 2 are generally applicable to private virtual networks 314A, 314B, and 314C unless in conflict with the following. In at least some embodiments, private virtual networks 314A, 314B, and 314C are configured to interface with virtualized environment 306 and vehicle service APIs 316A, 316B, and 316C. In at least some embodiments, private virtual networks 314A, 314B, and 314C are configured to connect virtualized environments, such as virtualized environment 306, to specific vehicle service APIs, such as one or more of vehicle service APIs 316A, 316B, and 316C. As shown in the embodiment of FIG. 3, private virtual network 314A connects only vehicle service API 316A to an application, and private virtual network 314C connects only vehicle service API 316C to an application, but private virtual network 314B connects vehicle service API 316A and vehicle service API 316B to an application.

The descriptions of vehicle service APIs 216A and 216B with respect to FIG. 2 are generally applicable to vehicle service APIs 316A, 316B, and 316C unless in conflict with the following. In at least some embodiments, vehicle service APIs 316A, 316B, and 316C are configured to communicate with virtualized environments, such as virtualized environment 306, through one or more private virtual networks, such as private virtual networks 314A, 314B, and 314C. As shown in the embodiment of FIG. 3, vehicle service API 316A communicates with virtualized environments through private virtual network 314A and private virtual network 314B, while vehicle service API 316B communicates with only one virtualized environment through private virtual network 314B, and vehicle service API 316C communicates with only one virtualized environment through private virtual network 314C.

The descriptions of application package 218 with respect to FIG. 2 are generally applicable to application package 318 unless in conflict with the following. In at least some embodiments, application package 318 is configured to be deployable into virtualized environment 306 by orchestrator 310.

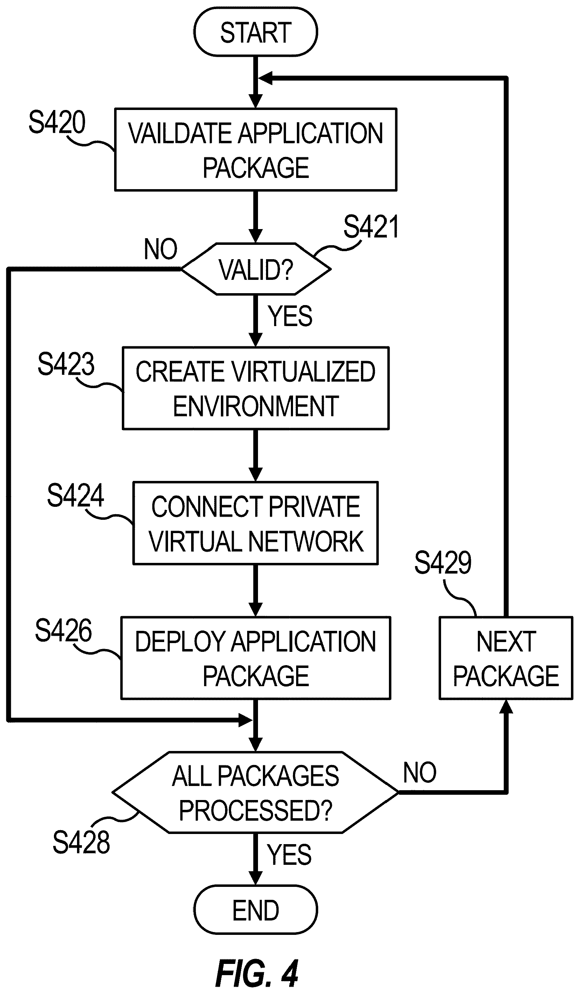

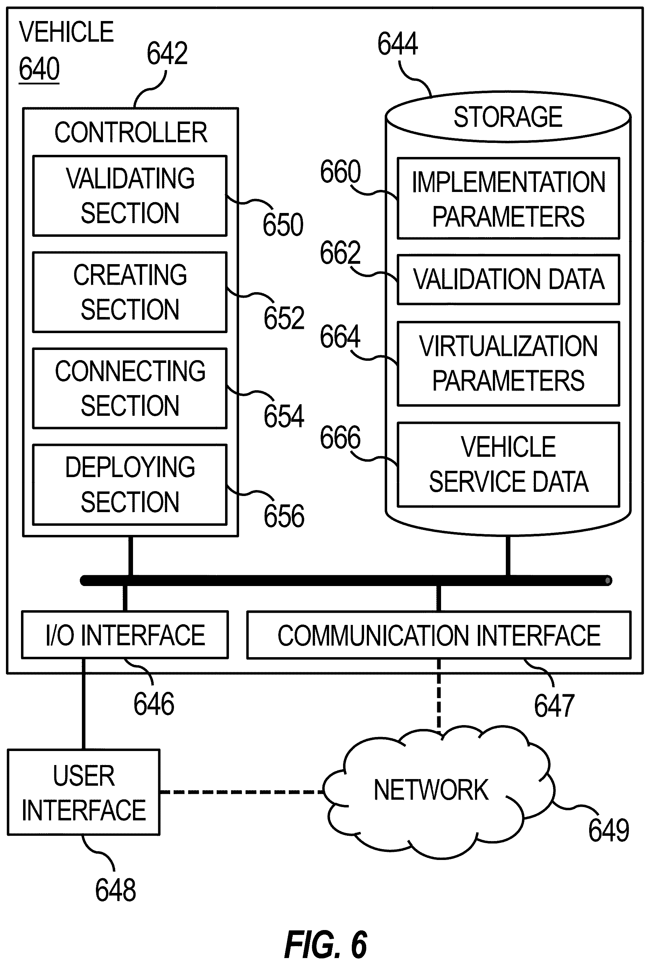

FIG. 4 is an operational flow for utilizing virtualization to isolate applications while providing API access, according to at least some embodiments of the subject disclosure. In at least some embodiments, the operational flow provides a method of utilizing virtualization to isolate applications while providing API access. In at least some embodiments, the method is performed by a controller of a vehicle, such as controller 642 of vehicle 640 of FIG. 6, described hereinafter. In at least some embodiments, the controller causes an orchestrator, such as orchestrator 310 of FIG. 3, to perform the method.

At S420, the controller validates the application package. In at least some embodiments, the controller validates the application package for execution of an application in a vehicle computing environment. In at least some embodiments, the controller reads metadata from the application package. In at least some embodiments, the controller reads metadata of the application package for validation information and identification of the at least one vehicle service API. In at least some embodiments, the controller verifies a digital signature. In at least some embodiments, the controller checks compatibility with the vehicle environment. In at least some embodiments, the controller reads a metadata file and a digital signature from an encrypted application configuration, such as encrypted application configuration 219 of FIG. 2. In at least some embodiments, as iterations of S420 proceed, the controller validates a plurality of application packages in response to startup of the vehicle computing environment.

At S421, the controller determines whether the application package is valid. In response to the controller determining that the application package is valid, the operational flow proceeds to virtualized environment creation at S423. In response to the controller determining that the application package is not valid, the operational flow proceeds to S428. In at least some embodiments, the controller checks for required permissions. In at least some embodiments, the controller validates against known vulnerabilities. In at least some embodiments, the controller utilizes permissions lists and a vulnerability database. In at least some embodiments, the controller confirms package integrity. In at least some embodiments, the controller validates according to predetermined permission levels and vulnerability criteria. In at least some embodiments, the controller determines whether deploying the application package will cause any version mismatches.

At S423, the controller creates a virtualized environment. In at least some embodiments, the controller creates the virtualized environment in the vehicle computing environment, the virtualized environment dedicated to execution of the application. In at least some embodiments, the controller causes a virtualization module, such as virtualization module 108 of FIG. 1, to create the virtualized environment. In at least some embodiments, the controller allocates resources for the virtualized environment. In at least some embodiments, the controller initializes the virtualization software. In at least some embodiments, the controller creates the virtualized environment within predetermined resource limitations and environment constraints.

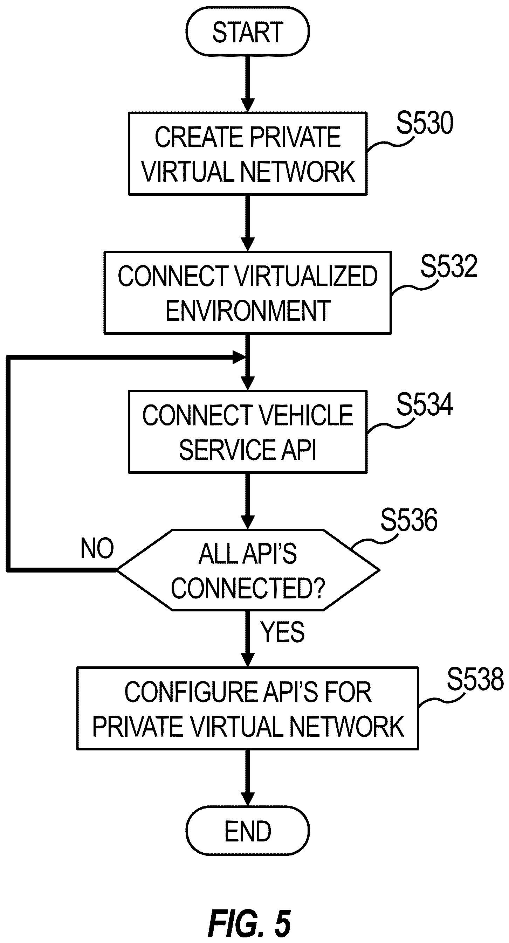

At S424, the controller connects the private virtual network. In at least some embodiments, the controller connects, to a private virtual network unique to the application, the virtualized environment and at least one vehicle service API executed in a native environment of the vehicle computing environment. In at least some embodiments, the controller creates a private virtual network instance. In at least some embodiments, the controller assigns one or more network addresses. In at least some embodiments, the controller configures the private virtual network for isolation from other networks. In at least some embodiments, the controller utilizes network instance data and an address pool. In at least some embodiments, the controller connects the virtualized environment and vehicle service API according to predetermined network topology parameters, an address pool, etc. In at least some embodiments, the controller performs the operational flow of FIG. 5, which is described hereinafter.

At S426, the controller deploys the application package. In at least some embodiments, the controller deploys the application package into the virtualized environment. In at least some embodiments, the controller transfers the application package to the virtualized environment for deployment. In at least some embodiments, the controller unpacks the application files. In at least some embodiments, the controller sets up the execution context. In at least some embodiments, the controller deploys the application package according to parameters included in metadata from the application package. In at least some embodiments, the controller deploys the application package according to a predetermined transfer protocol and unpacking method. In at least some embodiments, the controller deploys the application package as a container image.

At S428, the controller determines whether all packages have been processed. In response to the controller determining that all packages have not been processed, the operational flow returns to application package validation at S420 to proceed with the next package (S429). In response to the controller determining that all packages have been processed, the operational flow ends. In at least some embodiments, the controller checks a package queue to select the next package to process.

In at least some embodiments, the validating is performed after the creating the virtualized environment and the connecting the virtual network and before the deploying the application package. In at least some embodiments, the validating is performed during at least one of the creating the virtualized environment and the creating the private virtual network and before the deploying the application package.

FIG. 5 is an operational flow for connecting a private virtual network, according to at least some embodiments of the subject disclosure. In at least some embodiments, the operational flow provides a method of connecting a private virtual network. In at least some embodiments, the method is performed by a controller of a vehicle, such as controller 642 of vehicle 640 of FIG. 6, described hereinafter. In at least some embodiments, the controller causes an orchestrator, such as orchestrator 310 of FIG. 3, to perform the method.

At S530, the controller creates a private virtual network. In at least some embodiments, the controller initializes the network configuration. In at least some embodiments, the controller allocates network resources. In at least some embodiments, the controller establishes the network topology. In at least some embodiments, the controller creates the private virtual network according to predetermined parameters for network configuration and network bandwidth. In at least some embodiments, the controller utilizes middleware, such as DATA DISTRIBUTION SERVICE (RTM), to create the private virtual network.

At S532, the controller connects a virtualized environment. In at least some embodiments, the controller connects the virtualized environment to the private virtual network. In at least some embodiments, the controller assigns a network address to the virtualized environment or an application executed within the virtualized environment. In at least some embodiments, the controller connects the virtualized environment to the private virtual network according to predetermined resource allocation tables, an address pool, etc.

At S534, the controller connects a vehicle service API. In at least some embodiments, the controller connects the vehicle service API to the private virtual network. In at least some embodiments, the controller assigns a network address to the vehicle service API. In at least some embodiments, the controller connects the vehicle service API to the private virtual network according to predetermined resource allocation tables, an address pool, etc. In at least some embodiments, the controller connects, to the private virtual network, an additional vehicle service API executed in the native environment.

At S536, the controller determines whether all APIs are connected. In response to the controller determining that all APIs are not connected, the operational flow returns to connecting the vehicle service API at S534. In response to the controller determining that all APIs are connected, the operational flow proceeds to configuring the APIs for the private virtual network at S538. In at least some embodiments, the controller checks the APIs identified in the metadata from the application package of an application connected to the private virtual network.

At S538, the controller configures the APIs for the private virtual network. In at least some embodiments, the controller configures the at least one vehicle service API to advertise through the private virtual network to the application. In at least some embodiments, the controller causes vehicle service APIs to advertise capabilities and functions through private virtual networks. In at least some embodiments, the controller causes each vehicle service API to advertise only to specific private virtual networks.

In at least some embodiments, the controller connects additional vehicle service APIs executed in the native environment after deploying the application package.

FIG. 6 is a block diagram of a hardware configuration for utilizing virtualization to isolate applications while providing API access, according to at least some embodiments of the subject disclosure. The hardware configuration includes vehicle 640, which interacts with user interface 648 directly or through network 649. In at least some embodiments, user interface 648 is a touch screen, a microphone, a camera, or any other device configured to detect tactile, aural, visual, etc. input. In at least some embodiments, network 649 is an ethernet network, a Controller Area Network (CAN), or any other wired or wireless network or a combination thereof. In at least some embodiments, vehicle 640 is a computer or other computing device that receives input or commands from user interface 648. In at least some embodiments, vehicle 640 is integrated with user interface 648. In at least some embodiments, vehicle 640 is a computer system that executes computer-readable instructions to perform operations for utilizing virtualization to isolate applications while providing API access.

Vehicle 640 includes controller 642, storage 644, input/output interface 646, and communication interface 647. In at least some embodiments, controller 642 includes a processor or programmable circuitry executing instructions to cause the processor or programmable circuitry to perform operations according to the instructions. In at least some embodiments, controller 642 includes analog or digital programmable circuitry, or any combination thereof. In at least some embodiments, controller 642 includes physically separated storage or circuitry that interacts through communication. In at least some embodiments, storage 644 includes a non-volatile computer-readable medium capable of storing executable and non-executable data for access by controller 642 during execution of the instructions. In at least some embodiments, communication interface 647 transmits and receives data from network 649. In at least some embodiments, input/output interface 646 connects to various input and output units, such as user interface 648, via a parallel port, a serial port, a keyboard port, a mouse port, a monitor port, and the like to accept commands and present information. In at least some embodiments, storage 644 is external from vehicle 640.

Controller 642 includes validating section 650, creating section 652, connecting section 654, and deploying section 656. storage 644 includes implementation parameters 660, validation data 662, virtualization parameters 664, and vehicle service data 666.

Validating section 650 is the circuitry or instructions of controller 642 configured to validate application packages. In at least some embodiments, validating section 650 is configured to validate the application package for execution of an application in a vehicle computing environment. In at least some embodiments, validating section 650 utilizes storage 644 to read or record information, such as validation data 662. In at least some embodiments, validating section 650 includes sub-sections for performing additional functions, as described in the foregoing flow charts. In at least some embodiments, such sub-sections are referred to by a name associated with a corresponding function.

Creating section 652 is the circuitry or instructions of controller 642 configured to create virtualized environments and private virtual networks. In at least some embodiments, creating section 652 is configured to create the virtualized environment in the vehicle computing environment, the virtualized environment dedicated to execution of the application. In at least some embodiments, creating section 652 utilizes storage 644 to read or record information, such as virtualization parameters 664. In at least some embodiments, creating section 652 includes sub-sections for performing additional functions, as described in the foregoing flow charts. In at least some embodiments, such sub-sections are referred to by a name associated with a corresponding function.

Connecting section 654 is the circuitry or instructions of controller 642 configured to connect private virtual networks to virtualized environments and vehicle service APIs. In at least some embodiments, connecting section 654 is configured to connect, to a private virtual network unique to the application, the virtualized environment and at least one vehicle service API executed in a native environment of the vehicle computing environment. In at least some embodiments, connecting section 654 utilizes storage 644 to read or record information, such as vehicle service data 666. In at least some embodiments, connecting section 654 includes sub-sections for performing additional functions, as described in the foregoing flow charts. In at least some embodiments, such sub-sections are referred to by a name associated with a corresponding function.

Deploying section 656 is the circuitry or instructions of controller 642 configured to deploy application packages. In at least some embodiments, deploying section 656 is configured to deploy the application package into the virtualized environment. In at least some embodiments, deploying section 656 utilizes storage 644 to read or record information, such as implementation parameters 660. In at least some embodiments, deploying section 656 includes sub-sections for performing additional functions, as described in the foregoing flow charts. In at least some embodiments, such sub-sections are referred to by a name associated with a corresponding function.

In at least some embodiments, the vehicle is another device capable of processing logical functions in order to perform the operations herein. In at least some embodiments, the controller and the storage need not be entirely separate devices, but share circuitry or one or more computer-readable mediums. In at least some embodiments, the storage includes a hard drive storing both the computer-executable instructions and the data accessed by the controller, and the controller includes a combination of a central processing unit (CPU) and RAM, in which the computer-executable instructions are able to be copied in whole or in part for execution by the CPU during performance of the operations herein.

In at least some embodiments where the vehicle is a computer, a program that is installed in the computer is capable of causing the computer to function as or perform operations associated with apparatuses of the embodiments described herein. In at least some embodiments, such a program is executable by a processor to cause the computer to perform certain operations associated with some or all of the blocks of flowcharts and block diagrams described herein.

At least some embodiments are described with reference to flowcharts and block diagrams whose blocks represent (1) steps of processes in which operations are performed or (2) sections of hardware responsible for performing operations. In at least some embodiments, certain steps and sections are implemented by dedicated circuitry, programmable circuitry supplied with computer-readable instructions stored on computer-readable media, and/or processors supplied with computer-readable instructions stored on computer-readable media. In at least some embodiments, dedicated circuitry includes digital and/or analog hardware circuits and include integrated circuits (IC) and/or discrete circuits. In at least some embodiments, programmable circuitry includes reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

In at least some embodiments, the computer-readable medium includes a tangible device that is able to retain and store instructions for use by an instruction execution device. In at least some embodiments, the computer-readable medium includes, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

While embodiments of the present invention have been described, the technical scope of any subject matter claimed is not limited to the above described embodiments. Persons skilled in the art would understand that various alterations and improvements to the above-described embodiments are possible. Persons skilled in the art would also understand from the scope of the claims that the embodiments added with such alterations or improvements are included in the technical scope of the invention.

The operations, procedures, steps, and stages of each process performed by an apparatus, system, program, and method shown in the claims, embodiments, or diagrams are able to be performed in any order as long as the order is not indicated by "prior to," "before," or the like and as long as the output from a previous process is not used in a later process. Even if the process flow is described using phrases such as "first" or "next" in the claims, embodiments, or diagrams, such a description does not necessarily mean that the processes must be performed in the described order.

In at least some embodiments, utilizing virtualization to isolate applications while providing API access is implemented by validating an application package for execution of an application in a vehicle computing environment, creating a virtualized environment in the vehicle computing environment, the virtualized environment dedicated to execution of the application, connecting, to a private virtual network unique to the application, the virtualized environment and at least one vehicle service API executed in a native environment of the vehicle computing environment, and deploying the application package into the virtualized environment.

In at least some embodiments, utilizing virtualization to isolate applications while providing API access is further implemented by configuring the at least one vehicle service API to advertise through the private virtual network to the application. In at least some embodiments, utilizing virtualization to isolate applications while providing API access is further implemented by reading metadata of the application package for validation information and identification of the at least one vehicle service API. In at least some embodiments, the at least one vehicle service API is configured to provide, upon request by the application, information about at least one of vehicle speed, vehicle location, transmission state, and engine temperature. In at least some embodiments, the at least one vehicle service API is configured to perform, upon request by the application, actions for at least one of music navigation, climate control, and media playback. In at least some embodiments, the private virtual network isolates the virtualized environment from applications and vehicle service APIs that are not connected to the private virtual network. In at least some embodiments, the validating the application package includes validating a plurality of application packages including the application package in response to startup of the vehicle computing environment. In at least some embodiments, the validating is performed after the creating the virtualized environment and the connecting the virtual network and before the deploying the application package. In at least some embodiments, the validating is performed during at least one of the creating the virtualized environment and the creating the private virtual network and before the deploying the application package. In at least some embodiments, utilizing virtualization to isolate applications while providing API access is further implemented by connecting, to the private virtual network, an additional vehicle service API executed in the native environment.

In at least some embodiments, utilizing virtualization to isolate applications while providing API access is implemented by validating an application package for execution of an application in a vehicle computing environment, creating a virtualized environment in the vehicle computing environment, the virtualized environment dedicated to execution of the application, connecting, to a private virtual network unique to the application, the virtualized environment and at least one vehicle service API executed in a native environment of the vehicle computing environment, and deploying the application package into the virtualized environment.

In at least some embodiments, utilizing virtualization to isolate applications while providing API access further includes configuring the at least one vehicle service API to advertise through the private virtual network to the application. In at least some embodiments, utilizing virtualization to isolate applications while providing API access further includes reading metadata of the application package for validation information and identification of the at least one vehicle service API. In at least some embodiments, the at least one vehicle service API is configured to provide, upon request by the application, information about at least one of vehicle speed, vehicle location, transmission state, and engine temperature. In at least some embodiments, the at least one vehicle service API is configured to perform, upon request by the application, actions for at least one of music navigation, climate control, and media playback.

In at least some embodiments, utilizing virtualization to isolate applications while providing API access is implemented by a controller including circuitry configured to perform operations including validating an application package for execution of an application in a vehicle computing environment, creating a virtualized environment in the vehicle computing environment, the virtualized environment dedicated to execution of the application, connecting, to a private virtual network unique to the application, the virtualized environment and at least one vehicle service API executed in a native environment of the vehicle computing environment, and deploying the application package into the virtualized environment.

In at least some embodiments, utilizing virtualization to isolate applications while providing API access further includes configuring the at least one vehicle service API to advertise through the private virtual network to the application. In at least some embodiments, utilizing virtualization to isolate applications while providing API access further includes reading metadata of the application package for validation information and identification of the at least one vehicle service API. In at least some embodiments, the at least one vehicle service API is configured to provide, upon request by the application, information about at least one of vehicle speed, vehicle location, transmission state, and engine temperature. In at least some embodiments, the at least one vehicle service API is configured to perform, upon request by the application, actions for at least one of music navigation, climate control, and media playback.

The foregoing outlines features of several embodiments so that those skilled in the art would better understand the aspects of the present disclosure. Those skilled in the art should appreciate that this disclosure is readily usable as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that various changes, substitutions, and alterations herein are possible without departing from the spirit and scope of the present disclosure.

## Claims

1. A computer program causing one or more processors to perform operations comprising:
validating an application package (218, 318) for execution of an application (212) in a vehicle computing environment (100);
creating a virtualized environment (106A, 106B, 206, 306) in the vehicle computing environment (100), the virtualized environment (106A, 106B, 206, 306) dedicated to execution of the application (212);
connecting, to a private virtual network (114A, 114B, 214, 314A, 314B, 314C) unique to the application (212), the virtualized environment (106A, 106B, 206, 306) and at least one vehicle service API (216A, 216B, 316A, 316B, 316C) executed in a native environment (204) of the vehicle computing environment (100); and
deploying the application package (218, 318) into the virtualized environment (106A, 106B, 206, 306).

2. The computer program of claim 1, wherein the operations further comprise
configuring the at least one vehicle service API (216A, 216B, 316A, 316B, 316C) to advertise through the private virtual network (114A, 114B, 214, 314A, 314B, 314C) to the application (212).

3. The computer program of claim 1 or 2, wherein the operations further comprise
reading metadata of the application package (218, 318) for validation information and identification of the at least one vehicle service API (216A, 216B, 316A, 316B, 316C).

4. The computer program of any one of claims 1 to 3, wherein the at least one vehicle service API (216A, 216B, 316A, 316B, 316C) is configured to provide, upon request by the application (212), information about at least one of vehicle speed, vehicle location, transmission state, and engine temperature.

5. The computer program of any one of claims 1 to 4, wherein the at least one vehicle service API (216A, 216B, 316A, 316B, 316C) is configured to perform, upon request by the application (212), actions for at least one of music navigation, climate control, and media playback.

6. The computer program of any one of claims 1 to 5, wherein the private virtual network (114A, 114B, 214, 314A, 314B, 314C) isolates the virtualized environment (106A, 106B, 206, 306) from applications and vehicle service APIs that are not connected to the private virtual network (114A, 114B, 214, 314A, 314B, 314C).

7. The computer program of any one of claims 1 to 6, wherein the validating the application package (218, 318) includes validating a plurality of application packages including the application package (218, 318) in response to startup of the vehicle computing environment (100).

8. The computer program of any one of claims 1 to 7, wherein the validating is performed after the creating the virtualized environment (106A, 106B, 206, 306) and the connecting the private virtual network (114A, 114B, 214, 314A, 314B, 314C) and before the deploying the application package (218, 318).

9. The computer program of any one of claims 1 to 7, wherein the validating is performed during at least one of the creating the virtualized environment (106A, 106B, 206, 306) and the creating the private virtual network (114A, 114B, 214, 314A, 314B, 314C) and before the deploying the application package (218, 318).

10. The computer program of any one of claims 1 to 9, wherein the operations further comprise
connecting, to the private virtual network (114A, 114B, 214, 314A, 314B, 314C), an additional vehicle service API executed in the native environment (204).

11. A method comprising:
validating an application package (218, 318) for execution of an application (212) in a vehicle computing environment (100);
creating a virtualized environment (106A, 106B, 206, 306) in the vehicle computing environment (100), the virtualized environment (106A, 106B, 206, 306) dedicated to execution of the application (212);
connecting, to a private virtual network (114A, 114B, 214, 314A, 314B, 314C) unique to the application (212), the virtualized environment (106A, 106B, 206, 306) and at least one vehicle service API (216A, 216B, 316A, 316B, 316C) executed in a native environment (204) of the vehicle computing environment (100); and
deploying the application package (218, 318) into the virtualized environment (106A, 106B, 206, 306).

12. The method of claim 11, further comprising
configuring the at least one vehicle service API (216A, 216B, 316A, 316B, 316C) to advertise through the private virtual network (114A, 114B, 214, 314A, 314B, 314C) to the application (212).

13. The method of claim 11 or 12, further comprising
reading metadata of the application package (218, 318) for validation information and identification of the at least one vehicle service API (216A, 216B, 316A, 316B, 316C).

14. The method of any one of claims 11 to 13, wherein the at least one vehicle service API (216A, 216B, 316A, 316B, 316C) is configured to provide, upon request by the application (212), information about at least one of vehicle speed, vehicle location, transmission state, and engine temperature.

15. The method of any one of claims 11 to 14, wherein the at least one vehicle service API (216A, 216B, 316A, 316B, 316C) is configured to perform, upon request by the application (212), actions for at least one of music navigation, climate control, and media playback.

16. A device comprising:
a controller including circuitry configured to perform operations including:
validating an application package (218, 318) for execution of an application (212) in a vehicle computing environment (100),
creating a virtualized environment (106A, 106B, 206, 306) in the vehicle computing environment (100), the virtualized environment (106A, 106B, 206, 306) dedicated to execution of the application (212),
connecting, to a private virtual network (114A, 114B, 214, 314A, 314B, 314C) unique to the application (212), the virtualized environment (106A, 106B, 206, 306) and at least one vehicle service API (216A, 216B, 316A, 316B, 316C) executed in a native environment (204) of the vehicle computing environment (100), and
deploying the application package (218, 318) into the virtualized environment (106A, 106B, 206, 306).

17. The device of claim 16, wherein the operations further include
configuring the at least one vehicle service API (216A, 216B, 316A, 316B, 316C) to advertise through the private virtual network (114A, 114B, 214, 314A, 314B, 314C) to the application (212).

18. The device of claim 16 or 17, wherein the operations further include
reading metadata of the application package (218, 318) for validation information and identification of the at least one vehicle service API (216A, 216B, 316A, 316B, 316C).

19. The device of any one of claims 16 to 18, wherein the at least one vehicle service API (216A, 216B, 316A, 316B, 316C) is configured to provide, upon request by the application (212), information about at least one of vehicle speed, vehicle location, transmission state, and engine temperature.

20. The device of any one of claims 16 to 19, wherein the at least one vehicle service API (216A, 216B, 316A, 316B, 316C) is configured to perform, upon request by the application (212), actions for at least one of music navigation, climate control, and media playback.
